# EUROPEAN PATENT APPLICATION

(11) **EP 3 761 602 A1**
(43) Date of publication of application: **06.01.2021**
(21) Application number: 19757188.8
(22) Date of filing: 26.02.2019
(51) Int. Cl.: H04L 29/08

(54) **RANDOM ACCESS DETECTION METHOD AND DEVICE**

(30) Priority: 26.02.2018 CN 201810162714
(71) Applicant: Sanechips Technology Co., Ltd., Shenzhen, Guangdong 518055 (CN)
(72) Inventor: LI, Dong, Shenzhen, Guangdong 518057 (CN); WANG, Jiadong, Shenzhen, Guangdong 518057 (CN)
(74) Representative: Aipex B.V.
(86) International application number: PCT/CN2019/076196
(87) International publication number: WO 2019/161806

(57) **Abstract**

Disclosed are a random access detection method and apparatus. The random access detection method includes: sequentially storing data received from each antenna of a set of antennas in a first storage area corresponding to the each antenna by taking a symbol as a processing unit of data received from the set of antennas, where the set of antennas includes at least one antenna; sequentially reading the data received from the each antenna from the first storage area corresponding to the each antenna by taking the symbol as the processing unit, and determining a wireless configuration parameter corresponding to the read symbol data; and preprocessing the read symbol data according to the determined wireless configuration parameter, and caching the preprocessed symbol data in a second storage area corresponding to the each antenna; where the preprocessing includes at least: cyclic prefix removal processing, frequency spectrum shifting processing, and decimation filtering processing.

## Description

The present disclosure claims priority to a Chinese patent application No. 201810162714.0 filed on February 26, 2018, disclosure of which is incorporated herein by reference in its entirety.

### TECHNICAL FIELD

The present disclosure relates to the field of wireless communication technologies, for example, relates to a random access detection method and apparatus.

### BACKGROUND

In the 4th generation communication system (4G) and fifth-Generation communication system (5G) standards, for an uplink, a user equipment (UE) uses a physical random access channel (PRACH) to perform cell access. Some subframes may be configured as PRACH subframes, and the UE may send a random access sequence on these subframes. The random access sequence includes one or more preamble sequences. According to different 4G/5G protocol standards, the random access sequences are different.

If a base station desires to support 4G/5G random access detection at the same time, solutions in the related art mostly use two sets of random access signal processing apparatuses (4G and 5G respectively), but merely a 4G standard or a 5G standard is used in a cell, so the disadvantage of resources wasting exists.

### SUMMARY

The present disclosure provides a random access detection method and apparatus, which can simultaneously support random access detection of a wireless access system with multiple different communication standard protocols.

The present disclosure provides a random access detection method, and the method includes the following steps.

Data received from each antenna of a set of antennas is sequentially stored in a first storage area corresponding to the each antenna by taking a symbol as a processing unit of the data received from the set of antennas, where the set of antennas includes at least one antenna.

The data received from the each antenna is sequentially read from the first storage area corresponding to the each antenna by taking the symbol as the processing unit, and a wireless configuration parameter corresponding to the read symbol data is determined.

The read symbol data is preprocessed according to the determined wireless configuration parameter, and the preprocessed symbol data is cached in a second storage area corresponding to the each antenna; where the preprocessing includes at least: cyclic prefix removal processing, frequency spectrum shifting processing, and decimation filtering processing.

The present disclosure provides a random access detection apparatus, and the apparatus includes an antenna data storage module, a symbol data reading module and a first processing module.

The antenna data storage module is configured to sequentially store data received from each antenna of a set of antennas in a first storage area corresponding to the each antenna by taking a symbol as a processing unit of the data received from the set of antennas, where the set of antennas includes at least one antenna.

The symbol data reading module is configured to sequentially read the data received from the each antenna from the first storage area corresponding to the each antenna by taking the symbol as the processing unit, and determine a wireless configuration parameter corresponding to the read symbol data.

The first processing module is configured to preprocess the read symbol data according to the determined wireless configuration parameter, and cache the preprocessed symbol data in a second storage area corresponding to the each antenna; where the preprocessing includes at least: cyclic prefix removal processing, frequency spectrum shifting processing, and decimation filtering processing.

The present disclosure further provides a random access detection apparatus, and the apparatus includes: a memory, a processor, and a random access detection program stored in the memory and operable on the processor, where the random access detection program, when executed by the processor, implements the random access detection method.

### BRIEF DESCRIPTION OF DRAWINGS

FIG. 1 is a schematic diagram of a PRACH preamble format of a 4G protocol in the related art;
FIG. 2(a) is a schematic diagram of a PRACH preamble format of a 5G protocol in the related art;
FIG. 2(b) is a schematic diagram illustrating an example of a short code of a preamble format of a 5G protocol in the related art;
FIG. 2(c) is a schematic diagram illustrating an example of a long code of a preamble format of a 5G protocol in the related art;
FIG. 3 is a flowchart of a random access detection method according to an embodiment;
FIG. 4 is a schematic diagram of a random access detection apparatus according to an embodiment;
FIG. 5(a) is a schematic diagram of data processing in a single-protocol scenario according to an embodiment; and
FIG. 5(b) is a schematic diagram of data processing in a two-protocol scenario according to an embodiment.

### DETAILED DESCRIPTION

Embodiments of the present disclosure will be described below with reference to the drawings.

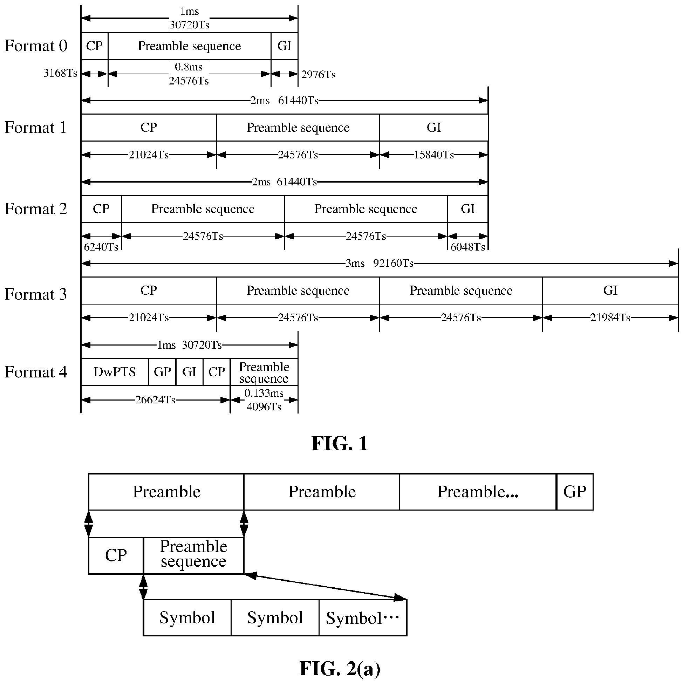

For 4G uplink random access detection, one or more preambles need to be extracted at different frequency points in a corresponding time domain resource at the same time, restored to a sequence of 839 or 139 points, and subjected to convolution correlation processing with the corresponding locally-generated mother code sequence (Zadoff-Chu sequence). Peak detection is performed on the obtained correlation sequence to obtain detailed information of the peak position. The essence of the random access detection is the process of convolution correlation between the received sequence and the local mother code sequence. Due to the high complexity of the convolutional correlation calculation, usually according to the principle of convolution correlation calculation, related sequences are converted to a frequency domain by using fast Fourier transform (FFT) for dot product operation, and the result is converted to a time domain through inverse fast Fourier transform (IFFT) to obtain an equivalent result. As shown in FIG. 1, a 4G PRACH channel preamble format includes formats 0 to 4. The 4G PRACH channel preamble format generally includes a cyclic prefix (CP), one or more preamble sequences and a guard interval (GI). Some formats may also include a down pilot time slot (DwPTS) or a guard period (GP). The sampling rates described in a 4G long term evolution (LTE) protocol include: 9 types of sampling rates such as 30.72 megahertz (MHz), 23.04 MHz, 19.20 MHz, 15.36 MHz, 11.52 MHz, 7.68 MHz, 5.76 MHz, 3.84 MHz and 1.92 MHz. Taking the sampling rate of 30.72 MHz as an example, each preamble sequence of formats 0 to 3 has 24576 sampling points, and the preamble sequence of format 4 has 4096 sampling points. Therefore, when a system bandwidth is relatively large and the sampling rate is relatively high, downsampling has to be performed to reduce the number of sampling points to a level equivalent to the number of points of a Zadoff-Chu sequence, and then correlation processing is performed with the locally-generated cell Zadoff-Chu sequence. In this way, processing computation burden can be reduced, processing resources can be saved, and processing speed can be accelerated.

For each frequency point, the same bandwidth (for example, 1.08 MHz) is provided, merely the offset is different, and the steps to be processed are also the same. Therefore, most of the related solutions use a single frequency point random access signal processing apparatus, that is, merely random access processing (steps such as frequency spectrum shifting, filtering, downsampling and FFT) of one frequency point may be processed at a time. The amount of PRACH data for each antenna is large and the duration of each PRACH is also very long (n single carrier-frequency division multiple access (SC-FDMA) symbols). In the related art, usually all the points of one preamble are cached before PRACH processing is started, so a large storage space is required and the processing delay is large. For a frequency division duplexing (FDD) mode, merely one access frequency point exists, so merely a single frequency point apparatus is required. However, for a time division duplexing (TDD) mode, when multiple frequency points exist, multiple sets of single frequency point apparatuses are generally used to process the multiple frequency points in parallel at the same time, and a waste of resources exists.

The basic principle of random access detection of 5G new radio technology (NR) is consistent with that of 4G LTE, and the steps to be processed are similar, that is, one or more preambles are extracted at different frequency points in a corresponding time domain resource at the same time and restored to a sequence of 1536 or 256 points.

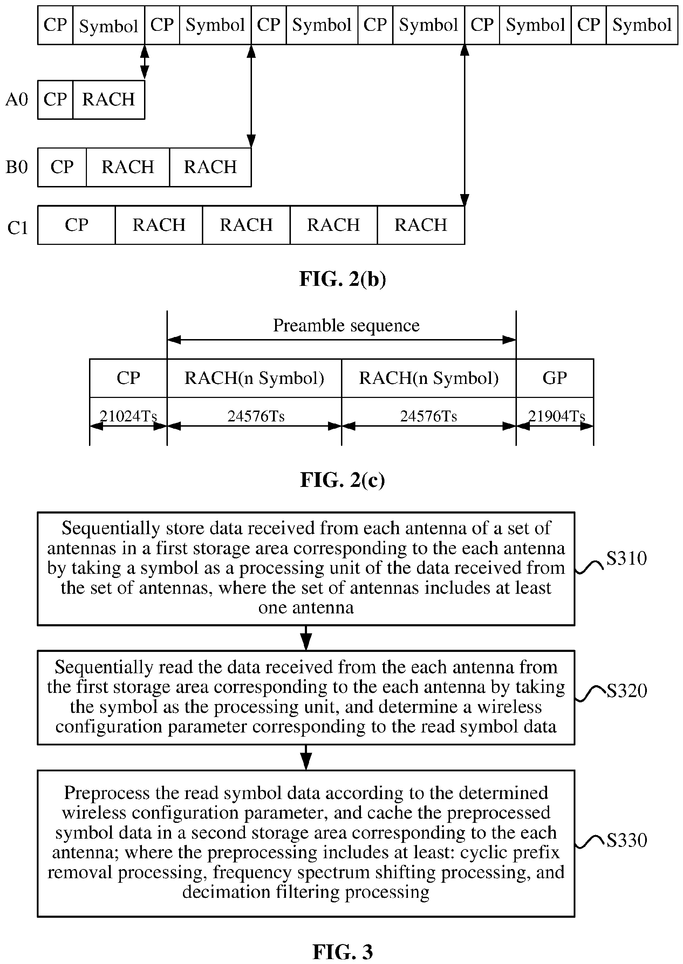

As shown in FIG. 2(a), for a 5G NR PRACH, a preamble format may include one or more preambles, and one preamble includes one preamble sequence and one CP. One preamble sequence includes one or more orthogonal frequency division multiplexing (OFDM) symbols. The preamble format of the 5G NR PRACH includes 4 long-code formats (format 0 to format 3) and 10 short-code formats (format A0, format A1, format A2, format A3, format B0, format B1, format B2, format B3, format C1 and format C2). In the examples of a short code shown in FIG. 2(b), in format A0, one preamble occupies 1 symbol; in format B0, one preamble occupies 2 symbols; in format C1, one preamble occupies 4 symbols. In the examples of a long code shown in FIG. 2(c), one preamble sequence may include two random access channels (RACHs), and each RACH may include multiple symbols. The difference among PRACH preamble format types is the difference in the number of RACHs, CP length, and GP length.

The sampling rates described in a 5G new radio (NR) protocol include: 13 types of sampling rates such as 19.2 MHz, 30.72 MHz, 38.4 MHz, 46.08 MHz, 61.44 MHz, 76.8 MHz, 92.16 MHz, 107.52 MHz, 122.88 MHz, 153.6 MHz, 184.32 MHz, 215.04 MHz and 245.76 MHz. Taking the subcarrier spacing of 2.5 kHz as an example, the protocol determines that a Zadoff-Chu sequence with a length of 839 points generates each preamble sequence, 8 times decimation need to be performed on 12288 sampling points at 30.72 MHz, 64 times decimation need to be performed on 98304 sampling points at 245.76 MHz, and the amount of data is very large.

At the same time, the 5G NR protocol is still evolving, so it is necessary to consider the later evolution change of the protocol. Most of the solutions in the related art use fixed random access signal processing apparatuses. In this way, the protocol has to be completely clear to design random access. Therefore, either waiting for the protocol to be fully determined with a time delay or repeating the random access design multiple times with a waste of personnel is needed.

In the technical solution provided by the present disclosure, OFDM or SC-FDMA symbols are used as data processing units for performing CP removal, frequency spectrum shifting, and decimation filtering on uplink time domain antenna data, caching too much data is not needed, and when the OFDM or SC-FDMA symbol data in a shared cache is a complete preamble, subsequent signal detection is performed. Since an OFDM or SC-FDMA symbol is used as a processing unit for the antenna data of the technical solution provided by the present disclosure, the random access detection method provided by the present disclosure can seamlessly switch and process 4G and 5G PRACH data. In this manner, processing speed can be accelerated, antenna data cache is reduced, and resource consumption is reduced. The solution can flexibly support a variety of different 4G/5G configuration scenarios, and has good scalability: easily adding a new processing apparatus for parallel processing, and flexibly adapting to the evolution of 4G/5G protocol by adopting parameter configuration.

### Embodiment 1

FIG. 3 is a flowchart of a random access detection method according to an embodiment. As shown in FIG. 3, the method provided by the embodiment includes the steps described below.

In step S310, data received from each antenna of a set of antennas is sequentially stored in a first storage area corresponding to the each antenna by taking a symbol as a processing unit of the data received from the set of antennas, where the set of antennas includes at least one antenna.

In step S320, the data received from the each antenna is sequentially read from the first storage area corresponding to the each antenna by taking the symbol as the processing unit, and a wireless configuration parameter corresponding to the read symbol data is determined.

In step S330, the read symbol data is preprocessed according to the determined wireless configuration parameter, and the preprocessed symbol data is cached in a second storage area corresponding to the each antenna; where the preprocessing includes at least: cyclic prefix removal processing, frequency spectrum shifting processing, and decimation filtering processing.

In the embodiment, the symbol data refers to uplink time domain data received by the antenna. According to the embodiment, the symbol data is corresponding data read from the first storage area by taking a symbol as a processing unit each time.

In the embodiment, the random access detection method may be implemented on a base station.

In the embodiment, the wireless configuration parameter includes at least one of the following information: a type of communication protocol, a type of preamble format of a physical random access channel, a sampling rate, or a decimation multiple.

In the embodiment, the type of communication protocol includes: a fourth generation communication system protocol or a fifth-generation mobile communication system protocol.

In the embodiment, the symbol includes: an orthogonal frequency division multiplexing (OFDM) symbol or a single carrier-frequency division multiple access (SC-FDMA) symbol.

In an embodiment, the method further includes: pre-configuring a wireless configuration parameter of each antenna of a set of antennas; and establishing the first storage area and the second storage area which are corresponding to the each antenna according to the wireless configuration parameter of the each antenna.

In the embodiment, the wireless configuration parameter corresponding to the symbol data is the wireless configuration parameter of the corresponding antenna.

In an embodiment, the step of performing the cyclic prefix removal processing according to the determined wireless configuration parameter refers to the following: for example, for the CP removal processing, the CP and the GI can be removed on the basis of the sampling rate and the preamble format and according to the PRACH preamble frame structure, and if the DwTPS and the GP exist, the DwTPS and the GP need to be removed, and the real valid preamble sequence sampling points are left. In scenarios with different protocols and different preamble formats, the lengths of valid preamble sequence data are different. In the embodiment, it is necessary to know the protocol type of the currently processed data (the protocol type corresponding to each symbol data to be processed), the corresponding bandwidth, and the preamble format, and then determine the CP removal type of each OFDM symbol or SC-FDMA symbol, a design parameter for frequency spectrum shifting, a decimation filtering parameter, and a data output length.

Frequency spectrum shifting is performed according to the determined wireless configuration parameter. For example, for the frequency spectrum shifting, the frequency band occupied by the PRACH may be moved to the center position of the baseband according to the PRACH frequency spectrum parameters.

Decimation filtering processing is performed according to the determined wireless configuration parameter, for example, the decimation multiple is determined according to the sampling rate, the number of frequency points included in the frequency band, and the type of preamble format to perform downsampling processing. The filter may be implemented by a half-band filter, which supports both 4G and 5G protocols, and nearly 20 sampling rates. For 4G LTE, stage 1 decimation filter may be designed. Since 5G NR has a large bandwidth and the protocol is evolving, stage 2 decimation filtering may be designed. According to the stage 2 multiple decimation rate configuration, a variety of complex decimation rate requirements may be supported to adapt the evolution of 5G protocols, and the stage 2 decimation filtering has a high degree of flexibility. At the same time, for the 5G NR, the stage 2 decimation filter may also be set to implement the decimation filtering process of 4G LTE.

In an embodiment, after the preprocessed symbol data is cached in a second storage area corresponding to the each antenna, the method further includes: when at least one symbol data that has been preprocessed exists in a second storage area corresponding to an antenna of the set of antennas and the at least one symbol data already constitutes a complete preamble data of the antenna of the set of antennas, preamble detection processing is performed on the complete preamble data of the antenna of the set of antennas according to a wireless configuration parameter corresponding to the antenna of the set of antennas; where the preamble detection processing includes at least: fast Fourier transform (FFT) processing, mother code correlation processing, inverse fast Fourier transform (IFFT) processing and peak detection processing.

According to the frequency spectrum distribution, the sequence of each frequency point may be directly extracted from the frequency domain signal generated by the FFT operation, and the sequence has a length of n points (different protocols have different definitions). A same FFT calculation module may be used for FFT and IFFT to complete FFT/IFFT processing of 256 points, 320 points, 384 points, 512 points, 640 points, 768 points, 1024 points, 1280 points, 1536 points, 1920 points, 2048 points, 2304 points, 3072 points, 3584 points, 4096 points, 5120 points, 6144 points, 7168 points and 8192 points.

The mother code correlation processing refers to the following: a local cell generates a local mother code sequence according to the wireless configuration parameter, frequency domain point multiplication is performed on the mother code sequence and the sequence of each frequency point extracted from the FFT output result, and the obtained result is subjected to subsequent processing such as IFFT inverse transform to obtain a set of sequences, where the sequences are used for subsequent peak detection.

Peak detection processing refers to the following: the base station finds a checkpoint corresponding to the largest time domain correlation value from the current preamble data subjected to mother code correlation processing, and when the peak of the time domain correlation value is greater than the set peak detection threshold and noise power, the preamble signal is considered to be detected.

### Embodiment 2

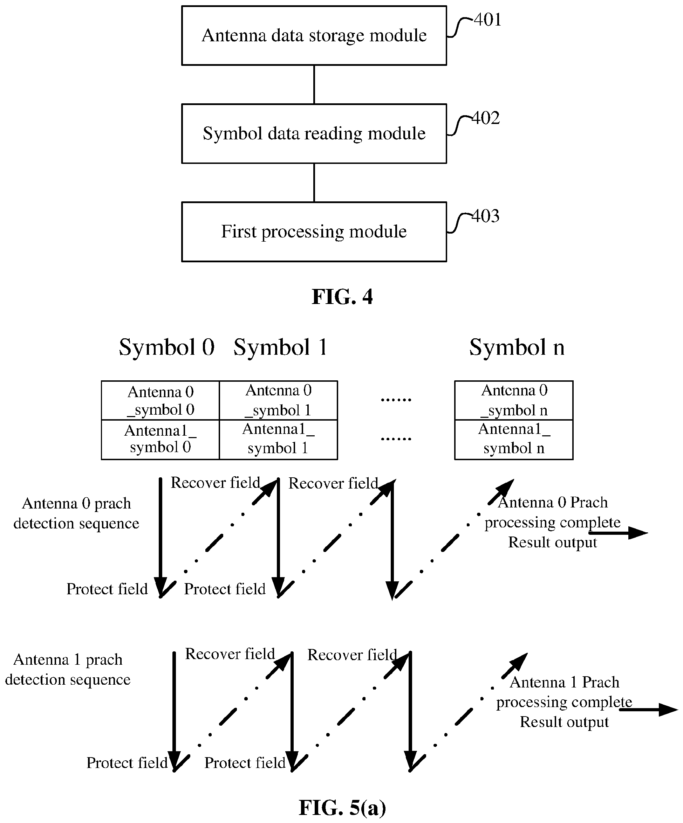

FIG. 4 is a random access detection apparatus according to an embodiment. As shown in FIG. 4, the apparatus provided in the embodiment includes: an antenna data storage module 401, which is configured to sequentially store data received from each antenna of a set of antennas in a first storage area corresponding to the each antenna by taking a symbol as a processing unit of data received from the set of antennas, where the set of antennas includes at least one antenna; a symbol data reading module 402, which is configured to sequentially read the data received from the each antenna from the first storage area corresponding to the each antenna by taking the symbol as the processing unit, and determine a wireless configuration parameter corresponding to the read symbol data; and a first processing module 403, which is configured to preprocess the read symbol data according to the determined wireless configuration parameter, and cache the preprocessed symbol data in a second storage area corresponding to the each antenna; where the preprocessing includes at least: cyclic prefix removal processing, frequency spectrum shifting processing, and decimation filtering processing.

In an embodiment, the apparatus further includes: a second processing module, which is configured to perform preamble detection processing on the complete preamble data of an antenna of the set of antennas according to a wireless configuration parameter corresponding to the antenna of the set of antennas when at least one symbol data that has been preprocessed exists in a second storage area corresponding to the antenna of the set of antennas and the at least one symbol data already constitutes a complete preamble data of the antenna of the set of antennas; where the preamble detection processing includes at least: fast Fourier transform (FFT) processing, mother code correlation processing, inverse fast Fourier transform (IFFT) processing and peak detection processing.

In the embodiment, the wireless configuration parameter includes at least one of the following information: a type of communication protocol, a type of preamble format of a physical random access channel, a sampling rate, or a decimation multiple.

In the embodiment, the symbol includes: an orthogonal frequency division multiplexing (OFDM) symbol or a single carrier-frequency division multiple access (SC-FDMA) symbol.

In the embodiment, the type of communication protocol includes: a fourth generation communication system protocol or a fifth-generation mobile communication system protocol.

In an embodiment, the apparatus further includes: a configuration module, which is configured to pre-configure a wireless configuration parameter of each antenna of a set of antennas, and establish the first storage area and the second storage area which are corresponding to the each antenna according to the wireless configuration parameter of the each antenna.

The technical solution provided by the present disclosure is illustrated by the following examples.

### Example 1

The random access detection apparatus of the example includes a hardware acceleration module and a software processing module. Multiple sampling rates described by the 4G LTE protocol and multiple sampling rates described by the 5G NR protocol are supported. Sampling rates and bandwidth may be flexibly matched according to system requirements. The hardware acceleration module of the random access detection apparatus uses an OFDM or SC-FDMA symbol as a processing unit, and pre-processes data received from each antenna and caches the preprocessed data in a shared cache. The pre-processing includes: CP removal processing, frequency spectrum shifting, filtering and decimation processing. The software processing module needs to complete the FFT/IFFT processing, since data interleaving exists, the data cannot be processed by taking the OFDM or SC-FDMA symbol data as the processing unit, and the hardware acceleration module is required to complete a complete PRACH preamble data of an antenna before starting software subsequent processing. After the complete preamble is detected in the shared cache, the software processing module performs the subsequent processing: IFFT, mother code correlation processing, peak detection and other processing.

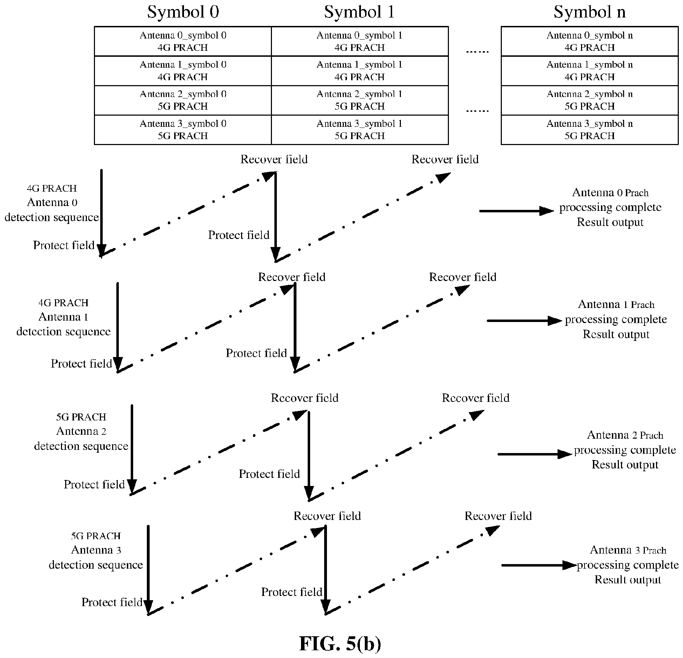

As shown in FIG. 5 (a), the PRACH data is OFDM or SC-FDMA symbols, which are input sequentially. Merely in a single-protocol scenario with the LTE or 5G protocol, the hardware acceleration module starts PRACH processing every time data of OFDM or SC-FDMA time is received by taking data received during time of the OFDM or SC-FDMA symbol as the processing unit. As shown in FIG. 5 (b), in a multi-protocol and multi-antenna scenario, PRACHs of multiple antennas need to be processed during time of one OFDM or SC-FDMA symbol. For example, during time of one OFDM symbol, the PRACH data processing of two different protocols of 4G and 5G is completed in sequence, the intermediate results of PRACH data of different antennas need to be protected, and the corresponding antenna data is recovered when the next OFDM or SC-FDMA symbol data arrives and then processing continues.

In the embodiment, for the CP removal processing, the CP and the GI can be removed on the basis of the sampling rate and the format according to the PRACH preamble frame structure, and if the DwTPS and the GP exist, the DwTPS and the GP need to be removed, and the real valid preamble sequence sampling points are left. In scenarios with different protocols and different preamble formats, the lengths of valid preamble sequence data are different. In the embodiment, a parameter analysis module needs to know the protocol type of the currently processed data (the protocol type corresponding to each symbol data to be processed), the corresponding bandwidth, and the preamble format, and the parameter analysis module analyzes the CP removal type of each OFDM symbol or SC-FDMA symbol, design parameters for frequency spectrum shifting, decimation filtering parameters, and a data output length.

In the embodiment, for the frequency spectrum shifting, the frequency band occupied by the PRACH may be moved to the center position of the baseband through a digital mixing unit according to the PRACH frequency spectrum parameters analyzed by the parameter analysis module. A frequency spectrum shifting processing unit processes PRACH data in time-division according to OFDM or SC-FDMA symbol time. The field of the digital mixing unit needs to be saved and recovered to complete the switching of multiple protocols and multiple antennas. For example, when frequency spectrum shifting of the symbol m of the antenna n is performed, it is necessary to first recover the processing information of the symbol (m-1) of the antenna n by the digital mixing unit, and then process the symbol m of the antenna n.

In the embodiment, a decimation module needs to determine the decimation multiple according to the sampling rate, the number of frequency points included in the frequency band, and the type of preamble format, and perform downsampling processing. In an embodiment, the filter is implemented by using a half-band filter, and the filter supports both 4G and 5G protocols and nearly 20 sampling rates. Multiple filtering bandwidths are supported according to the number of frequency points included in the frequency band, and the multiple filtering bandwidths are 1.08 MHz, 2.16 MHz, 3.24 MHz, 4.32 MHz, 5.40 MHz, and 6.48 MHz. Since the decimation module processes PRACH data in a time-division manner of symbol time, operations of protecting the filtering field and recovering the filtering field are required. For 4G LTE, merely stage 1 decimation filter is required. Table 1 is a partial description of the design of 4G LTE decimation filter. Since 5G NR has a large bandwidth and the protocol is evolving, when a decimation filter is designed, a stage 2 decimation filtering design may be used. According to the stage 2 multiple decimation rate configuration, a variety of complex decimation rate requirements may be supported to adapt the evolution of the 5G protocol. The stage 2 decimation filter has a high degree of flexibility. Table 2 is a partial description of the decimation filter design of the 5G protocol. At the same time, for the 5G NR, the stage 2 decimation filter may be set to implement the coverage of decimation filtering of 4G LTE.

**Table 1**

| Sampling rate (MHz) | The number of preamble sampling points | Frequency point 1 | | Frequency point 2 | | Frequency point 3 | |
|---|---|---|---|---|---|---|---|
| | | Decimation multiple | The number of output points | Decimation multiple | The number of output points | Decimation multiple | The number of output points |
| 1.92 | 1536 | 1 | 1536 | | | | |
| 3.84 | 3072 | 2 | 1536 | | | | |
| 5.76 | 4608 | 3 | 1536 | 2 | 2304 | | |
| 7.68 | 6144 | 4 | 1536 | 3 | 2048 | | |
| 11.52 | 9216 | 6 | 1536 | 4 | 2304 | 3 | 3072 |
| 15.36 | 12288 | 8 | 1536 | 6 | 2048 | 4 | 3072 |
| 19.20 | 15360 | 10 | 1536 | 8 | 1920 | 5 | 3072 |
| 23.04 | 18432 | 12 | 1536 | 8 | 2304 | 6 | 3072 |
| 30.72 | 24576 | 16 | 1536 | 12 | 2048 | 8 | 3072 |

**Table 2**

| Sampling rate (MHz) | The number of preamble sampling points | Preamble being a long code | | |
|---|---|---|---|---|
| | | Stage 1 decimation multiple | Stage 2 decimation multiple | The number of output points |
| 30.72 | 12288 | 8 | 0 | 1536 |
| 61.44 | 24576 | 2 | 8 | 1536 |
| 92.16 | 36864 | 3 | 8 | 1536 |
| 122.88 | 49152 | 4 | 8 | 1536 |
| 184.32 | 73728 | 6 | 8 | 1536 |
| 245.76 | 98304 | 8 | 8 | 1536 |

| Sampling rate (MHz) | The number of preamble sampling points | Preamble being a short code | | |
|---|---|---|---|---|
| 30.72 | 2048 | 8 | 0 | 256 |
| 61.44 | 4096 | 8 | 2 | 256 |
| 92.16 | 6144 | 8 | 3 | 256 |

| Sampling rate (MHz) | The number of preamble sampling points | Preamble being a long code | | |
|---|---|---|---|---|
| | | Stage 1 decimation multiple | Stage 2 decimation multiple | The number of output points |
| 122.88 | 8192 | 8 | 4 | 256 |
| 184.32 | 12288 | 8 | 6 | 256 |
| 245.76 | 16384 | 8 | 8 | 256 |

After the complete PRACH preamble data of an antenna is already stored in the shared cache, the software processing module performs processing such as FFT/IFFT, mother code correlation, and peak detection on the preamble data. The software processing module first reads the output data of the hardware acceleration module to complete the FFT operation. The sequence of each frequency point may be directly extracted in the frequency domain signal generated by the FFT operation according to the frequency spectrum distribution, and the sequence has a length of n points (different protocols have different definitions). A same FFT calculation module may be used for FFT and IFFT to complete FFT/IFFT processing of 256 points, 320 points, 384 points, 512 points, 640 points, 768 points, 1024 points, 1280 points, 1536 points, 1920 points, 2048 points, 2304 points, 3072 Points, 3584 points, 4096 points, 5120 points, 6144 points, 7168 points and 8192 points.

The mother code correlation processing process refers to the following: a local cell generates a local mother code sequence according to the wireless configuration parameter configured by the software, frequency domain point multiplication is performed on the mother code sequence and the sequence of each frequency point extracted from the FFT output result, and the obtained result is subjected to subsequent processing such as IFFT inverse transform to obtain a new set of sequences, where the new set of sequences are used for subsequent PRACH peak detection.

Peak detection processing refers to the following: the base station finds the checkpoint corresponding to the largest time domain correlation value (time domain correlation peak) from the current preamble data subjected to correlation processing. When the time domain correlation peak is greater than the set peak detection threshold and noise power, it is considered that a preamble signal is detected and detailed information of the peak position is obtained.

## Claims

1. A random access detection method, comprising:
sequentially storing data received from each antenna of a set of antennas in a first storage area corresponding to the each antenna by taking a symbol as a processing unit of the data received from the set of antennas, wherein the set of antennas comprises at least one antenna;
sequentially reading the data received from the each antenna from the first storage area corresponding to the each antenna by taking the symbol as the processing unit, and determining a wireless configuration parameter corresponding to the read symbol data; and
preprocessing the read symbol data according to the determined wireless configuration parameter, and caching the preprocessed symbol data in a second storage area corresponding to the each antenna; wherein the preprocessing comprises at least: cyclic prefix removal processing, frequency spectrum shifting processing, and decimation filtering processing.

2. The method of claim 1, after the caching the preprocessed symbol data in a second storage area corresponding to the each antenna, further comprising:
in a case where at least one symbol data that has been preprocessed exists in a second storage area corresponding to an antenna of the set of antennas and where the at least one symbol data already constitutes a complete preamble data of the antenna of the set of antennas, performing preamble detection processing on the complete preamble data of the antenna of the set of antennas according to a wireless configuration parameter corresponding to the antenna of the set of antennas; wherein the preamble detection processing comprises at least: fast Fourier transform, FFT, processing, mother code correlation processing, inverse fast Fourier transform, IFFT, processing and peak detection processing.

3. The method of claim 1 or 2, wherein
the wireless configuration parameter comprises at least one of the following information: a type of communication protocol, a type of preamble format of a physical random access channel, a sampling rate, or a decimation multiple.

4. The method of claim 1, 2 or 3, further comprising:
pre-configuring the wireless configuration parameter of the each antenna of the set of antennas; and
establishing the first storage area and the second storage area which are corresponding to the each antenna according to the wireless configuration parameter of the each antenna.

5. The method of claim 3, wherein
the type of communication protocol comprises: a fourth generation communication system protocol or a fifth-generation mobile communication system protocol.

6. The method of claim 1 or 2, wherein
the symbol comprises: an orthogonal frequency division multiplexing, OFDM, symbol or a single carrier-frequency division multiple access, SC-FDMA, symbol.

7. A random access detection apparatus, comprising:
an antenna data storage module, which is configured to sequentially store data received from each antenna of a set of antennas in a first storage area corresponding to the each antenna by taking a symbol as a processing unit of the data received from the set of antennas, wherein the set of antennas comprises at least one antenna;
a symbol data reading module, which is configured to sequentially read the data received from the each antenna from the first storage area corresponding to the each antenna by taking the symbol as the processing unit, and determine a wireless configuration parameter corresponding to the read symbol data; and
a first processing module, which is configured to preprocess the read symbol data according to the determined wireless configuration parameter, and cache the preprocessed symbol data in a second storage area corresponding to the each antenna; wherein the preprocessing comprises at least: cyclic prefix removal processing, frequency spectrum shifting processing, and decimation filtering processing.

8. The apparatus of claim 1, further comprising:
a second processing module, which is configured to perform preamble detection processing on the complete preamble data of an antenna of the set of antennas according to a wireless configuration parameter corresponding to the antenna of the set of antennas in a case where at least one symbol data that has been preprocessed exists in a second storage area corresponding to the antenna of the set of antennas and where the at least one symbol data already constitutes a complete preamble data of the antenna of the set of antennas; wherein the preamble detection processing comprises at least: fast Fourier transform, FFT, processing, mother code correlation processing, inverse fast Fourier transform, IFFT, processing and peak detection processing.

9. The apparatus of claim 7 or 8, wherein
the wireless configuration parameter comprises at least one of the following information: a type of communication protocol, a type of preamble format of a physical random access channel, a sampling rate, or a decimation multiple.

10. The apparatus of claim 7, 8 or 9, wherein the symbol comprises: an orthogonal frequency division multiplexing, OFDM, symbol or a single carrier-frequency division multiple access, SC-FDMA, symbol.

11. A random access detection apparatus, comprising: a memory, a processor, and a random access detection program stored in the memory and operable on the processor, wherein the random access detection program, when executed by the processor, implements the random access detection method of any one of claims 1 to 6.
